# EUROPEAN PATENT APPLICATION

(11) **EP 2 933 634 A1**
(43) Date of publication of application: **21.10.2015**
(21) Application number: 14164549.9
(22) Date of filing: 14.04.2014
(51) Int. Cl.: G01N 30/66, G01N 27/18

(54) **A thermal conductivity detector**

(71) Applicant: Siemens Aktiengesellschaft, 80333 München (DE)
(72) Inventor: Gellert, Udo, 76756 Bellheim (DE)

(57) **Abstract**

The invention relates to a thermal conductivity detector (5) comprising a measurement channel (6), an electrically heatable heating filament (7) disposed therein so that a fluid (23) passing through the measurement channel (6) flows around the filament (7) and evaluation means (8) for detecting electrical resistance changes of the heating filament (7) and providing an output (9) representative of the presence and amount of various fluid components passing the heating filament (7).

To improve the detection capability, particularly when used in gas chromatography with packed or PLOT columns, the thermal conductivity detector (5) further includes a permanent bypass channel (13) for bypassing the measurement channel (6), the bypass channel (13) having a lower fluidic resistance than the measurement channel (6). Preferably, a flow sensor (24) is provided for sensing the flow of the fluid in the bypass channel (13) and correcting the output (9) of the evaluation means (8) with the sensed flow.

## Description

The present invention relates to a thermal conductivity detector comprising a measurement channel, an electrically heatable heating filament disposed therein so that a fluid passing through the measurement channel flows around the filament and evaluation means for detecting electrical resistance changes of the heating filament and providing an output representative of the presence and amount of various fluid components passing the heating filament.

Such a thermal conductivity detector is known from either US 6,896,406 B2, WO 2009/095494 A1 or DE 10 2009 014 618 A1.

Thermal conductivity detectors are used to detect certain liquid or gaseous substances (fluids) on the basis of their characteristic thermal conductivity, particularly in gas chromatography. For this purpose, the substances to be detected, after their chromatographic separation, are successively guided past an electrically heated filament disposed in a measurement channel. Depending on the thermal conductivity of the substance flowing past, more or less heat is diverted from the heating filament to the wall of the measurement channel, and the heating filament is correspondingly cooled to a greater or lesser degree. As a result of the cooling of the heating filament, its electrical resistance changes, which is detected. For this purpose, the heating filament may be disposed in a measuring bridge, which contains additional resistors and an additional heating filament in a reference channel through which a reference fluid flows (e.g. US 5,756,878, Fig. 8). The thermal conductivity of the substance passing the heating filament is obtained from an amount of energy which is supplied to the measuring bridge and is controlled to maintain the temperature of the heating filament at a predetermined temperature. Instead of the resistors, further filaments may be provided which are fluidically parallel or in series with the filaments in the measurement channel and the reference channel, respectively.

It is also known to locate a temperature sensing filament in the wall of the measurement channel (e.g. US 5,756,878, Figs. 2 and 6; US 5,587,520). In this case, the thermal conductivity of the substance passing the heating filament is obtained from an amount of energy which is supplied to the measuring bridge and is controlled to keep the difference between the temperature of the heated filament and the wall temperature measured by the temperature sensing filament at a constant value. Thus, the detector output is independent of variations of the ambient temperature such as caused by thermal crosstalk from adjacent detectors and/or thermal waves, in particular heat waves which emanate from an oven of a gas chromatograph.

In gas chromatography, components or substances of a gas mixture are separated by passing a sample of the gas mixture in a carrier gas (mobile phase) through a separation column containing a stationary phase. The different components interact with the stationary phase which causes each component to elute at a different time, known as the retention time of the component. There are two general types of separation column, packed or capillary (open tubular). Packed columns consist of a tube filled with packing material. The stationary phase is applied to the surface of the packing material such as small particles. In capillary columns, the stationary phase is applied directly onto the inner wall of the capillary. Particularly, porous layer open tubular (PLOT) columns are made by coating a layer of small particles on the inner wall of the capillary.

A problem with packed columns filled with small particles and, in particular, with PLOT columns is that any change of gas velocity, pressure, surface stress or vibration may result in a release of particles. Such particles are swapped by the carrier gas to the detector and will lead to noise in the form of spikes in the detector output.

Another problem occurs with variations in the carrier gas flow, e.g. when the pressure is ramped, i.e. linearly varied with time, or when the carrier gas is switched between different separation columns. As the cooling of the heating filament is not only dependent on the thermal conductivity of the gas component to be measured, but also on the velocity with which the gas passes by the heating filament, variations in the gas flow through the measurement channel will affect the measurement result.

It is therefore an object of the present invention to give a solution for the problems described and to provide a thermal conductivity detector with improved detection capability.

According to the invention, this object is achieved by the thermal conductivity detector defined in claim 1.

Preferable embodiments of the thermal conductivity detector according to the invention are set forth in the subclaims.

Thus, subject of the invention is a thermal conductivity detector comprising a measurement channel, an electrically heatable heating filament disposed therein so that a fluid passing through the measurement channel flows around the filament and evaluation means for detecting electrical resistance changes of the heating filament and providing an output representative of the presence and amount of various fluid components passing the heating filament, said thermal conductivity detector further including a permanent bypass channel for bypassing the measurement channel, said bypass channel having a lower fluidic resistance than the measurement channel.

The term "permanent bypass channel" is to be understood that there is no switching or multiplexing means, such as valves, for temporarily bypassing the measurement channel, e.g. to protect the heating filament from aggressive components in the fluid.

As the permanent bypass channel has a lower fluidic resistance than the measurement channel, the fluid passing through the thermal conductivity detector is permanently divided into a smaller flow through measurement channel and a bigger flow through the bypass channel.

In gas chromatography, particles released from packed columns or PLOT columns have a higher mass than the gas molecules and thus will have a higher inertia. Accordingly, the particles will be entrained by the carrier gas flow into the bypass channel where the current is stronger. Thus, the gas flow through the measurement channel will be largely free of particles and the measurement will not be disturbed.

Furthermore, the influence of variations in the carrier gas flow on the measurement result will be reduced by the split ratio of the flow through measurement channel and the flow through the bypass channel.

The lower fluidic resistance of the bypass channel compared to the measurement channel can be achieved in that the bypass channel has a larger inner width and/or a shorter length than the measurement channel. Alternatively, or additionally, the measurement channel and the bypass channel may asymmetrically branch out from a common fluid delivery channel, the fluid delivery channel continuing straight into the bypass channel in the simplest case. This means that the branching angle of the measurement channel is larger than the branching angle of the bypass channel; the latter may even be zero. The split ratio of the partial flows through the measurement channel and the bypass channel is set by the branching angles of the two channels.

Furthermore, the influence of variations in the carrier gas flow on the measurement result will be reduced by the split ratio of the flow through the measurement channel and the flow through the bypass channel.

In order to not only reduce but compensate for the influence of variations in the carrier gas flow on the measurement result, the thermal conductivity detector according to the invention preferably comprises a flow sensor for sensing the flow of the fluid in the bypass channel and providing an output indicative thereof and correcting means for correcting the output of the evaluation means using the output of the flow sensor. The flow through the measurement channel is in the above mentioned split ratio proportional to the flow sensed in the bypass channel. Thus, the flow through the measurement channel is determined and used for correcting the measurement of thermal conductivity without interfering with it.

The flow sensor is preferably of thermal type so that the same technology is used for sensing the flow and the thermal conductivity. This facilitates the manufacturing of the thermal conductivity detector which is preferably realized in MEMS (Micro-Electro-Mechanical System) technology. The three basic types of thermal flow sensors include anemometers, calorimetric flow sensors and time-of-flight flow sensors, the latter of which is preferably used with the thermal conductivity detector according to the invention because it measures the flow unaffected by temperature, composition, thermal conductivity and viscosity of the fluid.

As the thermal conductivity detector according to the invention shows its advantages in particular in gas chromatography, a gas chromatograph comprising at least one thermal conductivity detector as described so far is a further subject of the invention.

The invention will now be described by way of example and with reference to the accompanying drawing, in which
- Fig. 1: is a simplified schematic block diagram of an exemplary gas chromatograph in accordance with the invention,
- Fig. 2: is a first exemplary embodiment of the thermal conductivity detector according to the invention,
- Fig. 3: is a simplified scheme of a modified version of the thermal conductivity detector and
- Fig. 4: is another exemplary embodiment of the thermal conductivity detector.

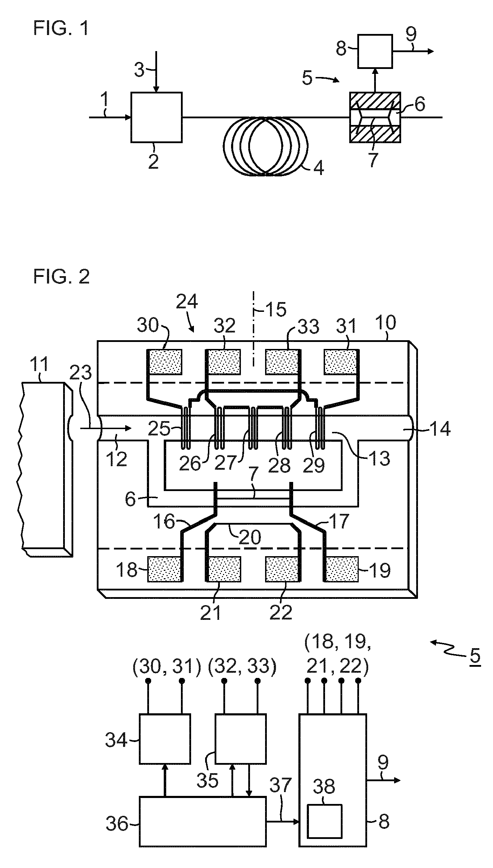

Fig. 1 shows a gas chromatograph in which a carrier gas 1 is delivered to an injector 2, loaded there with a sample of a gas mixture 3 to be analyzed and subsequently introduced into a separating device 4 such as a single separation column or a complete system of separation columns. The separated components or substances of the gas mixture emerging successively from the separating device 4 travel to a thermal conductivity detector 5. There, the separated gas components are conveyed in a measurement channel 6 past an electrically heated heating filament 7 arranged therein. Depending on the thermal conductivity of the gas components respectively flowing past in comparison with that of the carrier gas, more or less heat is transferred from the heating filament 7 to the channel wall so that the heating filament 7 is correspondingly cooled or heated. As a result, the electrical resistance of the heating filament 7 changes, which change is detected in an evaluation device 8 of the detector 5. To this end, the heating filament 7 may be arranged in a measurement bridge (not shown) that contains another heating filament in a further channel through which a reference gas, for example, the carrier gas 1, flows or, as described in detail below with reference to Fig. 2, preferably contains a temperature sensing filament that is located in the wall of the measurement channel. The evaluation device 8 provides an output 9 that indicates the presence and amount of the gas components passing the heating filament 7.

Fig. 2 shows an exemplary embodiment of the thermal conductivity detector 5 including a carrier plate 10 and a cover plate 11, which, in an assembled state, are positioned on top of one another and are joined together. The plates 10, 11 have congruent structures of grooves on their sides that face each other. The congruent grooves have semicircular cross sections and form channels that communicate with each other. The channels include, in particular, a fluid delivery channel 12 that branches in the measurement channel 6 and a bypass channel 13, which for their part end in a common fluid outlet channel 14. The branching of the measurement channel 6 and bypass channel 13 from fluid delivery channel 12 is asymmetrical with the fluid delivery channel 12 continuing straight into the bypass channel 13 and the measurement channel 6 diverging at a right or obtuse angle. Furthermore, the bypass channel 13 has a larger inner width than the measurement channel 6. The channel structure is formed in bilateral symmetry with respect to an axis 15 so that the fluid delivery channel 12 and the fluid outlet channel 14 may be used interchangeably.

A heating filament 7 is suspended longitudinally along the center of the measurement channel 6 between two electrically conductive supporting arms 16 and 17, which are formed on the side of the plate containing the grooves and which intersect the measurement channel 6. The supporting arms 16 and 17 end in contact pads 18 and 19, which are disposed on the carrier plate 10 in a region that is not covered by the plate 11. A temperature sensing filament 20 is located in the wall of the measurement channel 6 and connected to further contact pads 21 and 22. The heating filament 7 and the temperature sensing filament 20 are via their respective contact pads 18, 19, 21, 22 connected to the evaluation device 8 which determines presence and amount of a substance passing the heating filament 7 from the heat flow from the heating filament 7 to the wall of the measurement channel 6. The heat flow, on its part, is determined from an amount of energy that is supplied to the heating filament 7 and is controlled to keep the difference between the temperature of the heating filament 7 and the wall temperature measured by the temperature sensing filament 20 at a constant value.

The inlet flow of a fluid 23 coming from, e.g., the separating device 4 of Fig. 1 is divided into a smaller flow through the measurement channel 6 and a bigger flow through the bypass channel 13. As the flow through the measurement channel 6 is proportional to the flow in the bypass channel 13, the latter flow is sensed and used for correcting the measurement of thermal conductivity without interfering with it.

For that purpose, a thermal time-of-flight flow sensor 24 is provided in the bypass channel 13. The flow sensor 24 comprises several single or multiple folded conductive filaments 25, 26, 27, 28, 29 which are, preferably evenly, distributed along the bypass channel 13 and each cross the bypass channel 13. The outer filaments 25 and 29 are connected in series between two contact pads 30 and 31. The inner filaments 26-28 are also connected in series between two contact pads 32 and 33. The flow sensor 24 is based on the time-of-flight of a thermal pulse which is generated by means of the outer filaments 25 and 29, more exactly by the one of the outer filaments which is situated upstream in flow direction. To this end, the outer filaments 25 and 29 are via their contact pads 30 and 31 connected to an electrical pulse generator 34. The time-of-flight of the generated thermal pulse is measured by means of at least one of the inner sensing filaments 26-28. To this end, the inner filaments 26-28 are via their contact pads 32 and 33 connected to a resistance measurement circuit (ohmmeter) 35. The electrical pulse generator 34 and the resistance measurement circuit 35 are connected to a computing unit 36 which synchronizes the generation and detection of the heat pulses and provides an output 37 indicating the flow in the bypass channel 13. This output 37 is provided to correcting means 38 in the evaluation device 8 for correcting the measurement of thermal conductivity, more exactly, for correcting the measuring value of the amount of a substance passing the heating filament 7.

As described so far, the thermal flow sensor 24 is preferably based on the thermal time-of-flight principle which allows for measuring the flow unaffected by temperature, composition, thermal conductivity and viscosity of the fluid. If the flow sensor is of another type, such as anemometric or calorimetric type, its output may be corrected by using the temperature measured by the temperature sensing filament 20 or another temperature sensor and/or using the thermal conductivity measured in the measurement channel 6.

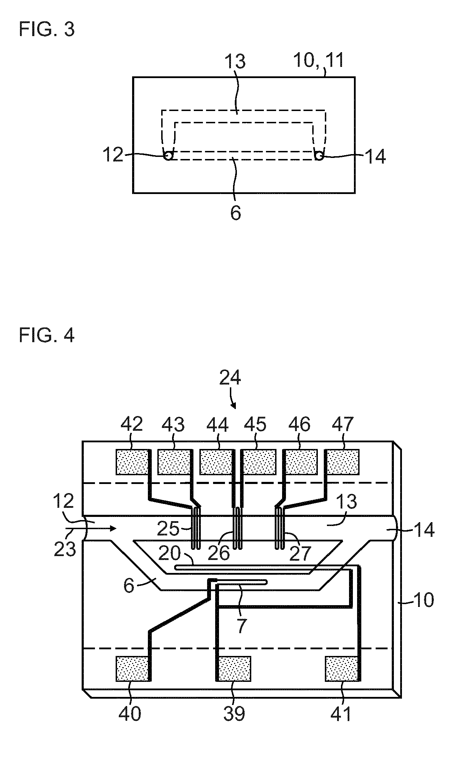

Fig. 3 shows in a very simplified scheme another version of the thermal conductivity detector 5 (i.e. the composite of the plates 10 and 11) with the fluid delivery channel 12 and the fluid outlet channel 14 running through the cover plate 11 and perpendicular to the measurement channel 6 and the bypass channel 13.

Fig. 4 shows another exemplary embodiment of the thermal conductivity detector 5 (here only plate 10) which mainly differs from that of Fig. 1 in that the heating filament 7 and the temperature sensing filament 20 are each formed as a single folded loop. The filaments 7 and 20 are connected in series with a middle and two outer connection pads 39, 40 and 41 so that they can easily be joined into a measuring bridge circuit. The thermal flow sensor 24 comprises three filaments 25-27 similar to those of Fig. 2, however, each with its own connection pads 42-47. The measurement channel 6 branches off from the fluid delivery channel 12 at an obtuse angle, the fluid delivery channel 12 continuing straight ahead into the bypass channel 13.

## Claims

1. A thermal conductivity detector (5) comprising a measurement channel (6), an electrically heatable heating filament (7) disposed therein so that a fluid (23) passing through the measurement channel (6) flows around the filament (7) and evaluation means (8) for detecting electrical resistance changes of the heating filament (7) and providing an output (9) representative of the presence and amount of various fluid components passing the heating filament (7), said thermal conductivity detector (5) further including a permanent bypass channel (13) for bypassing the measurement channel (6), said bypass channel (13) having a lower fluidic resistance than the measurement channel (6).

2. The thermal conductivity detector (5) of claim 1, wherein the bypass channel (13) has a larger inner width than the measurement channel (6).

3. The thermal conductivity detector (5) of claim 1 or 2, wherein the bypass channel (13) has a shorter length than the measurement channel (6).

4. The thermal conductivity detector (5) of one of the preceding claims, wherein the measurement channel (6) and the bypass channel (13) asymmetrically branch out from a common fluid delivery channel (12).

5. The thermal conductivity detector (5) of claim 4, wherein the fluid delivery channel (12) continues straight into the bypass channel (13).

6. The thermal conductivity detector (5) of one of the preceding claims further comprising a flow sensor (24) for sensing the flow of the fluid in the bypass channel (13) and providing an output (37) indicative thereof and correcting means (38) for correcting the output (9) of the evaluation means (8) using the output (37) of the flow sensor (24).

7. The thermal conductivity detector (5) of claim 6, wherein the flow sensor (24) is of thermal type.

8. The thermal conductivity detector (5) of claim 7, wherein the flow sensor (24) is a time-of-flight sensor.

9. The thermal conductivity detector (5) of one of the preceding claims being a MEMS (Micro-Electro-Mechanical System) based device.

10. Gas chromatograph comprising at least one thermal conductivity detector (5) of one of the preceding claims.
